# DEMANDE DE BREVET EUROPEEN

(11) **EP 1 213 267 A1**
(43) Date de publication de la demande: **12.06.2002**
(21) Numéro de dépôt: 01490051.8
(22) Date de dépôt: 06.12.2001
(51) Int. Cl.: C03B 33/04

(54) **Procédé et machine de découpage d'une pièce de matière présentant un contour donné, notamment verres de lunettes**

(30) Priorité: 06.12.2000 FR 0015806; 07.06.2001 FR 0107443
(71) Demandeur: Gravograph Industrie International, Société Anonyme, 10600 La Chapelle St Luc (FR)
(72) Inventeur: Guyard, Gérard, 10600 La Chapelle St Luc (FR)
(74) Mandataire: Duthoit, Michel

(57) **Abrégé**

L'invention concerne un procédé de découpage d'une pièce de matière présentant un contour donné, notamment verres de lunettes, à l'intérieur d'une ébauche de même matière, procédé dans lequel :
- on positionne ladite ébauche (1) sur un support (2) et on la maintient sur ledit support (2) au moins à l'aide de moyens de serrage (3) agissant au niveau des chants (4) de ladite ébauche,
- on déplace relativement l'un par rapport à l'autre lesdits moyens de coupe (5) et ladite ébauche (1) en définissant, d'une part, ladite pièce (6), située au niveau dudit support (2), et d'autre part, une chute annulaire de matière (7) maintenue par lesdits moyens de serrage (3) au niveau des chants (4) de ladite ébauche (1),
- on laisse lesdits moyens de serrage (3) s'escamoter sous le poids de ladite chute (7) pour évacuer cette dernière.

## Description

L'invention concerne un procédé et une machine de découpage d'une pièce de matière présentant un contour donné, notamment verres de lunettes, à l'intérieur d'une ébauche de même matière, ainsi qu'un dispositif de préhension, notamment destiné à être utilisé dans ladite machine de découpage.

Actuellement, pour tailler des verres, qu'il s'agisse de lunettes de vue et/ou de soleil, on a recours à des meuleuses, c'est-à-dire des outils agissant au niveau des chants des ébauches à travailler. Une telle technique ne permet pas de conférer aux verres des contours originaux et limite ainsi les possibilités en terme de création de modèles de lunettes.

Afin de remédier à cet inconvénient, il a été décidé, selon l'invention, d'utiliser une autre technique de taille. Celle-ci nécessite deux opérations, à savoir, une première opération de découpe de la pièce à former dans une ébauche puis une seconde étape de finition de ladite pièce, notamment, de ses chants.

Pour des raisons pratiques, il apparaît souhaitable que ces opérations puissent être effectuées à l'aide d'une même machine utilisant un outil de coupe unique ainsi qu'un dispositif de préhension commun pour l'ébauche et la pièce formée.

Il a ainsi fallu mettre au point un dispositif de préhension dont l'encombrement ne limite pas les déplacements de l'outil de coupe et permet de contrôler l'évacuation de la chute de matière créée lors de la définition de la pièce.

Le but de l'invention est de proposer un procédé et une machine de découpage d'une pièce de matière présentant un contour donné, notamment verres de lunettes, à l'intérieur d'une ébauche de même matière, ainsi qu'un dispositif de préhension, notamment destiné à une telle machine de découpage, qui permettent de résoudre les difficultés précédentes et rendent possible la taille de pièces selon des contours originaux.

Un autre but de la présente invention est de proposer un procédé et une machine de découpage d'une pièce de matière présentant un contour donné, notamment verres de lunettes, à l'intérieur d'une ébauche de même matière, ainsi qu'un dispositif de préhension, notamment destiné à une telle machine de découpage, qui soit simple d'utilisation et qui facilite l'usinage du verre, avant ou après découpe.

Un autre but de l'invention est de proposer un procédé et une machine de découpage d'une pièce de matière présentant un contour donné, notamment verres de lunettes, à l'intérieur d'une ébauche de même matière qui permet d'assurer le maintien de l'ébauche et/ou du verre pendant les opérations sans limiter le mouvement des outils de découpe.

Un autre but de l'invention est de proposer un procédé et une machine de découpage d'une pièce de matière présentant un contour donné, notamment verres de lunettes, à l'intérieur d'une ébauche de même matière qui permet de maintenir l'ébauche et/ou le verre pendant les opérations tout en contrôlant l'évacuation des chutes de matière.

D'autres buts et avantages de l'invention apparaîtront au cours de la description qui va suivre qui n'est donnée qu'à titre indicatif et qui n'a pas pour but de la limiter.

L'invention concerne tout d'abord un procédé de découpage d'une pièce de matière présentant un contour donné, notamment verres de lunettes, à l'intérieur d'une ébauche de même matière, procédé dans lequel :
- on positionne ladite ébauche sur un support et on la maintient sur ledit support au moins à l'aide de moyens de serrage agissant au niveau des chants de ladite ébauche,
- on déplace relativement l'un par rapport à l'autre lesdits moyens de coupe et ladite ébauche en définissant, d'une part, ladite pièce, située au niveau dudit support, et d'autre part, une chute annulaire de matière annulaire de matière maintenue par lesdits moyens de serrage au niveau des chants de ladite ébauche,
- on laisse lesdits moyens de serrage s'escamoter sous le poids de la chute pour évacuer cette dernière.

L'invention concerne également un dispositif de préhension pour pièce de matière présentant un contour donné, notamment verres de lunettes, destiné à être découpé à l'intérieur d'une ébauche de même matière, ledit dispositif comprenant :
- un support muni de moyens de positionnement de ladite ébauche,
- des moyens de serrage aptes à agir sur les chants de ladite ébauche au moins pour la maintenir en place sur ledit support,
- des moyens de maintien de ladite pièce sur ledit support après découpage de celle-ci dans ladite ébauche, lesdits moyens de maintien, distincts desdits moyens de serrage, étant aptes à agir sur une face de ladite pièce,
- des moyens d'escamotage desdits moyens de serrage, aptes à permettre l'évacuation d'une chute annulaire de matière obtenue après découpage de ladite pièce dans ladite ébauche.

L'invention concerne encore une machine de découpage d'une pièce de matière présentant un contour donné, notamment verres de lunettes, à l'intérieur d'une ébauche de même matière, ladite machine comprenant des moyens de coupe aptes à agir sur l'une des faces de ladite ébauche pour permettre de tailler ledit verre dans celle-ci selon ledit contour.

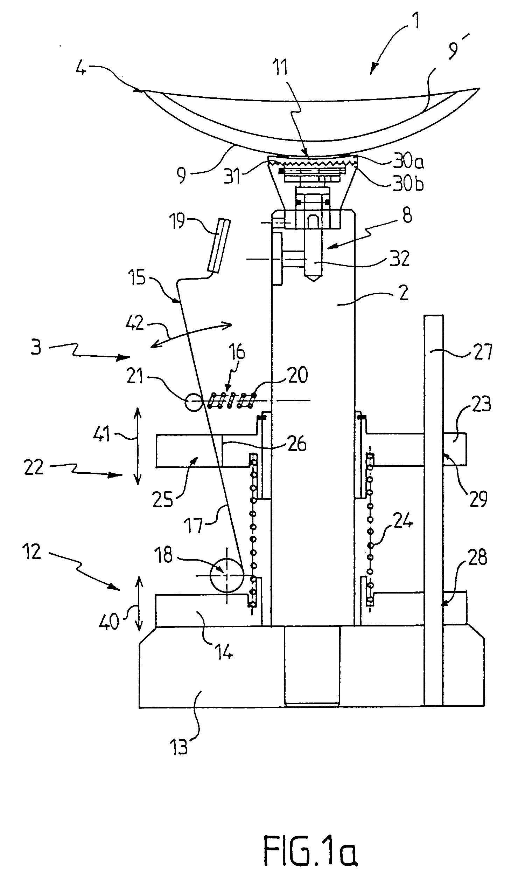

L'invention sera mieux comprise à la lecture de la description suivante, accompagnée des dessins en annexe parmi lesquels les figures 1a à 1c décrivent de manière schématique selon un plan de coupe diamétral un exemple de réalisation du dispositif de préhension conforme à l'invention dans différents états.

L'invention concerne tout d'abord un procédé de découpage d'une pièce de matière présentant un contour donné, notamment verres de lunettes, à l'intérieur d'une ébauche de même matière.

On entend par ébauche, dans le domaine considéré, un échantillon de matière présentant une épaisseur faible par rapport à ses autres dimensions. Une telle ébauche est ainsi munie de deux faces opposées et de chants séparant lesdites faces. Bien que décrite ci-dessous, en exemple, avec une ébauche de verre, l'invention peut s'adresser à tout matériau.

Comme illustré aux figures 1a à 1c, on positionne ladite ébauche 1 sur un support. Ladite ébauche 1 pourra être incurvée en fonction de l'effet optique recherché pour le verre. Elle est constituée, notamment de polycarbonate et/ou du matériau connu de l'homme de l'art sous le nom de CR39

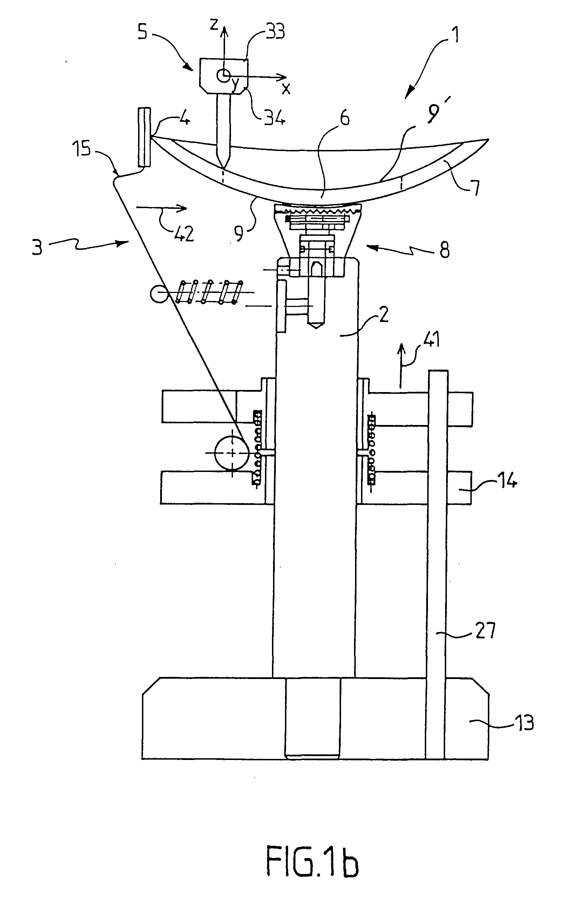

Selon l'invention, comme plus particulièrement illustré à la figure 1b, on taille ledit verre 6 dans ladite ébauche 1 selon le contour à l'aide de moyens de coupe 5 agissant sur l'une des faces 9' de ladite ébauche 1. On peut ainsi donner au verre 6 des contours très variés.

Il s'agit, par exemple, des moyens de coupe agissant mécaniquement, notamment par fraisage, plus précisément par micro-fraisage.

On pourra effectuer également un ou plusieurs perçages de ladite ébauche 1 et/ou une finition des chants dudit verre 6, après obtention, à l'aide desdits moyens de coupe 5. En utilisant le même outil, on facilite ainsi la mise en oeuvre de ces opérations.

Les opérations de perçage sont effectuées, notamment, au niveau du verre 6. Elles ont pour but, par exemple, de permettre l'accrochage des montures, branches et/ou pontets, des lunettes auxquelles le verre est destiné. Elles ont lieu, notamment, avant la découpe du verre 6.

Les opérations de finition dudit verre 6 consistent, par exemple, en un polissage de ses chants.

Afin de faciliter le travail de ladite ébauche 1, on pourra réaliser une aspersion de liquide de refroidissement sur celle-ci.

De façon avantageuse, on pourra maintenir ladite ébauche 1 par ses chants 10 et/ou par sa face 9 opposée à celle 9' où lesdits moyens de découpe agissent. Il est ainsi possible d'assurer le maintien de l'ébauche 1 sans occuper l'espace situé au-dessus de la face 9' où les moyens de découpe 5 agissent. Ils peuvent alors suivre n'importe quelle trajectoire.

Comme illustré à la figure 1a, selon un mode particulier de mise en oeuvre du procédé conforme à l'invention, on positionne tout d'abord ladite ébauche 1 sur un support 2.

Comme illustré à la figure 1b, on maintient alors ladite ébauche 1 sur ledit support 2 au moins à l'aide de moyens de serrage 3 agissant au niveau des chants 4 de ladite ébauche. Une fois lesdits moyens de serrage en place, on peut ainsi déplacer relativement l'un par rapport à l'autre desdits moyens de coupe 5, notamment constitués par un outil de découpe, et ladite ébauche 1 en définissant, d'une part, ladite pièce 6, située au niveau dudit support 2, et d'autre part, une chute annulaire 7 de matière, maintenue par lesdits moyens de serrage 3 au niveau desdits chants 4 de ladite ébauche 1. Pendant la découpe, ladite ébauche 1 est maintenue fixe par rapport au référentiel de déplacement des moyens de coupe 5, tandis que lesdits moyens de coupe 5 sont prévus mobiles.

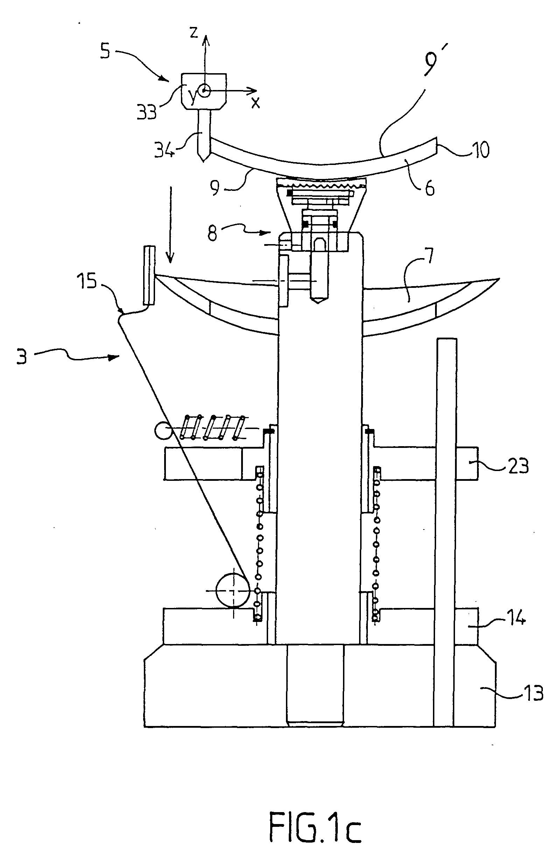

Comme illustré à la figure 1c, après séparation de la chute 7 et de ladite pièce 6, on laisse ensuite lesdits moyens de serrage 3 s'escamoter sous le poids de ladite chute 7 pour évacuer cette dernière.

On pourra notamment retenir ladite pièce 6, après obtention, et/ou ladite ébauche 1 pendant son usinage à l'aide de moyens de maintien 8, distincts desdits moyens de serrage 3, agissant au niveau de la face 9 de ladite pièce 6 opposée à celle 9', et on effectue une finition de ladite pièce 6 à l'aide desdits moyens de coupe 5 constitués par un outil de découpe. Lesdits moyens de maintien 8 permettent ainsi de renforcer la préhension de l'ébauche 1 lors des opérations de perçage et/ou de découpe et/ou d'assurer une immobilisation de ladite pièce 6 lors de l'évacuation de la chute 7 et/ou lors des finitions des chants 10 de la pièce 6.

On peut ainsi réaliser les opérations d'obtention du verre 6 tout en contrôlant l'évacuation de la chute de matière créée. L'ensemble des opérations étant réalisé en laissant libre les mouvements des moyens de coupe 5, constitués par un outil de découpe, les moyens nécessaires à la préhension de l'ébauche et/ou de la pièce pouvant être situés d'un même côté.

Selon un tel mode de réalisation, un même support est donc utilisé pour l'ébauche 1 et le verre 6 pendant toutes les opérations.

Selon un mode de réalisation particulier, lesdits moyens de maintien 8 pourront également être employés, avant et/ou pendant le découpage de ladite pièce 6, pour maintenir l'ébauche 1 sur ledit support 2, en plus desdits moyens de serrage 3.

Avant découpage, on pourra également effectuer un ou plusieurs perçages localisés de ladite ébauche 1, toujours à l'aide dudit outil de découpe 5, notamment à l'intérieur de la pièce 6 destinée à être définie. Dans le cas du découpage de verres de lunettes, les orifices obtenus pourront servir à la fixation des montures.

La finition de ladite pièce 6 est constituée, par exemple, par un polissage de ses chants 10.

L'invention concerne également un dispositif de préhension pour pièces de matière, présentant un contour donné, notamment verres de lunettes, destiné à être découpé à l'intérieur d'une ébauche de même matière.

Comme illustré aux figures 1a à 1c, ledit dispositif comprend :
- un support 2, muni de moyens de positionnement 11 de ladite ébauche 1,
- des moyens de serrage 3, aptes à agir sur les chants 4 de ladite ébauche 1 au moins pour la maintenir en place sur ledit support 2,
- des moyens de maintien 8 de ladite pièce 6 sur ledit support 2 après découpage de celle-ci dans ladite ébauche 1, lesdits moyens de maintien 8, distincts desdits moyens de serrage 3, étant aptes à agir sur une face 9 de ladite pièce 6,
- des moyens d'escamotage 12 desdits moyens de serrage 3 aptes à permettre l'évacuation d'une chute annulaire de matière 7 obtenue après découpage de ladite pièce 6 dans ladite ébauche 1 de façon à autoriser l'évacuation de ladite chute,

Ledit support 2 est constitué, par exemple, d'une tige sensiblement verticale, notamment assujettie à un socle 13, tandis que lesdits moyens d'escamotage 12 sont constitués, par exemple, d'un coulisseau 14, coulissant librement verticalement sur ladite tige 2, selon la flèche repérée 40, lesdits moyens de serrage 3 étant prévus en appui sur ledit coulisseau 14.

Après découpage de la pièce 6, la chute 7 peut ainsi être évacuée sous l'effet de son propre poids alors qu'elle reste maintenue par lesdits moyens de serrage 3 qui descendent avec ledit coulisseau 14 vers ledit socle 13.

Lesdits moyens de serrage 3 sont constitués, notamment, de brides 15, articulées radialement par rapport à ladite tige 2, et de moyens de rappel élastiques 16 desdites brides 16 vers ladite tige 2.

Lesdites brides 15 sont constituées, notamment, d'un doigt 17 dont l'une des extrémités 18 est articulée autour d'un point fixe sur le coulisseau 14 et/ou dont l'autre extrémité présente un tampon de maintien 19 de l'ébauche 1.

Lesdites brides 15 pourront être au nombre de trois, espacées entre elles d'environ 120 °, seule l'une d'entre elles étant représentées. Lesdits moyens de rappel sont alors constitués, par exemple, d'un ou plusieurs ressorts 20, partiellement représentés, définissant un triangle sensiblement équilatéral, situé dans un plan horizontal, les sommets dudit triangle étant assujettis à chacune desdites brides 15.

Il est prévu, notamment, trois dits ressorts 20, chacun étant assujetti par ses extrémités au niveau d'une bouche 21 prévue sur les doigts 17 desdites brides 15.

Le dispositif conforme à l'invention pourra encore comprendre des moyens d'ouverture 22 desdits moyens de serrage 3.

Ils sont constitués, par exemple, d'une bague d'ouverture 23, coulissant sur ladite tige 2, selon la flèche repérée 41, entre ledit coulisseau 14 et l'extrémité supérieure de la tige 2, où sont placés lesdits moyens de positionnement 11, ainsi que de moyens de rappel élastiques 24 tendant à écarter ladite bague 23 et ledit coulisseau 14. Ladite bague 23 est munie de fentes radiales 25, destinées à coopérer avec lesdites brides 15 pour entraîner un écartement angulaire de celle-ci par rapport à la verticale, selon la flèche repérée 42, sous l'action du fond 26 desdites fentes 25, au fur et à mesure du rapprochement de ladite bague 34 et dudit coulisseau 14. Ce rapprochement est obtenu, par exemple, manuellement, par l'utilisateur.

Ladite tige 2 est, par exemple, cylindrique. Pour empêcher la mise en rotation desdits moyens de serrage 3, on pourra prévoir un axe d'arrêt 27 traversant des orifices 28, 29 situés dans ledit coulisseau 14 et ladite bague d'ouverture 23.

Lesdits moyens de positionnement 11 sont constitués, notamment, d'une rondelle faisant ventouse dont une première partie 30a est destinée à être accrochée, par exemple, par collage, à l'ébauche 1, et dont l'autre 30b est assujettie à ladite tige 2, lesdites parties 30a, 30b de ladite rondelle coopérant entre elles par une interface crantée 31. Cette dernière est munie, éventuellement, d'un détrompeur permettant d'orienter l'ébauche 1.

Lesdits moyens de maintien 8 sont prévus aptes, par exemple, à appliquer une dépression à l'extrémité supérieure de ladite tige 2, à l'aide de conduits 32 traversant celle-ci ainsi que lesdits moyens de positionnement 11. Lesdits conduits 32 sont reliés, notamment, à des moyens d'aspiration d'air, non représentés.

A titre d'exemple non limitatif, le dispositif de préhension décrit plus haut pourra être utilisé de la manière suivante. On place tout d'abord ladite ébauche 1 sur ladite tige 2 à l'aide de ladite rondelle 30a, 30b, les brides 15 étant en position basse et fermée, comme illustré à la figure 1a, et on maintient ladite ébauche 1 par dépression. On couvre ensuite lesdites brides 15 en rapprochant ladite bague d'ouverture 23 et ledit coulisseau 14 et on fait monter l'ensemble jusqu'au niveau de l'ébauche 1. On relâche alors la bague d'ouverture 23 ce qui permet la mise en place des brides 15 contre l'ébauche 1, comme illustré à la figure 1b. Pendant le découpage, le maintien de l'ébauche 1 est ainsi assuré par la double action de la dépression et des brides, ce qui permet de travailler des matériaux difficiles, comme les polycarbonates. Après découpage de la pièce 6, la chute 7 descend vers le bas en compagnie de l'ensemble constitué des brides 15, du coulisseau 14 et des moyens d'ouverture 22, comme illustré à la figure 1c, la pièce 6 étant toujours maintenue par dépression, pour sa finition.

L'invention concerne encore une machine de découpage d'une pièce de matière présentant un contour donné, notamment verres de lunettes, à l'intérieur d'une ébauche de même matière, notamment pour la mise en oeuvre du procédé décrit plus haut.

Ladite machine de découpage comprend un dispositif de préhension tel que précédemment décrit, ainsi que des moyens de coupe 5 tels qu'un outil de découpe, par rapport à ladite ébauche 1, pour définir ladite pièce 6 dans celle-ci, et/ou par rapport à ladite pièce 6 pour sa finition.

Lesdits moyens de coupe 5 sont aptes à agir sur l'une des faces 9' de ladite ébauche 1 pour permettre de tailler ledit verre 6 dans celle-ci selon ledit contour. Lesdits moyens de coupe 5 pourront également être prévus aptes à permettre la réalisation d'un ou plusieurs perçage dudit verre 6 et/ou une finition des chants 10 de celui-ci, après obtention.

Lesdits moyens de coupe 5 sont constitués, par exemple, d'une broche porte-outils 33, coopérant avec des organes 34 de coupe, notamment micro-fraise. Ladite broche est munie d'un moteur électrique haute fréquence apte à entraîner l'organe 34, maintenu par une pince pneumatique.

Ladite machine comprend également, par exemple, des moyens de préhension 3, 8 de ladite ébauche 1 par ses chants 4 et/ou par sa face opposée 9 à celle 9' où lesdits moyens de coupe 5 agissent.

Ladite machine pourra également comprendre des moyens de déplacement des moyens de coupe 5. Ils sont constitués, par exemple, de moyens de pilotage de ladite broche 33, dans les trois directions de l'espace, sous le contrôle de moyens logiciels permettant la programmation des mouvements souhaités par un opérateur, comme cela est décrit, notamment, dans le brevet français FR-2.697.821.

Ladite machine de découpe pourra en outre comprendre des moyens d'aspersion d'un liquide de refroidissement et/ou lubrification sur lesdits moyens de coupe 5.

Naturellement, d'autres modes de mise en oeuvre, à la portée de l'homme de l'art, auraient pu être envisagés sans pour autant sortir du cadre de l'invention.

## Revendications

1. Procédé de découpage d'une pièce de matière présentant un contour donné, notamment verres de lunettes, à l'intérieur d'une ébauche de même matière, procédé dans lequel :
- on positionne ladite ébauche (1) sur un support (2) et on la maintient sur ledit support (2) au moins à l'aide de moyens de serrage (3) agissant au niveau des chants (4) de ladite ébauche,
- on déplace relativement l'un par rapport à l'autre lesdits moyens de coupe (5) et ladite ébauche (1) en définissant, d'une part, ladite pièce (6), située au niveau dudit support (2), et d'autre part, une chute annulaire de matière (7) maintenue par lesdits moyens de serrage (3) au niveau des chants (4) de ladite ébauche (1),
- on laisse lesdits moyens de serrage (3) s'escamoter sous le poids de ladite chute (7) pour évacuer cette dernière.

2. Procédé selon la revendication 1, dans lequel on retient ladite pièce (6) au niveau du support (2) à l'aide de moyens de maintien (8), distincts des moyens de serrage, agissant au niveau d'une face (9) de ladite pièce (6) opposée à celle (9') où lesdits moyens de coupe (5) agissent.

3. Procédé selon la revendication 1, dans lequel la finition de ladite pièce (6) est constituée par un polissage de ses chants (10).

4. Procédé selon la revendication 1, dans lequel on effectue un ou plusieurs perçages localisés de ladite ébauche (1) à l'aide dudit moyen de coupe (5).

5. Dispositif de préhension pour pièce de matière présentant un contour donné, notamment verres de lunettes, destiné à être découpé à l'intérieur d'une ébauche de même matière, ledit dispositif comprenant :
- un support (2) muni de moyens de positionnement (11) de ladite ébauche (1),
- des moyens de serrage (3) aptes à agir sur les chants (4) de ladite ébauche (1) au moins pour la maintenir en place sur ledit support (2),
- des moyens de maintien (8) de ladite pièce (6) sur ledit support, après découpage de celle-ci dans ladite ébauche (1), lesdits moyens de maintien, distincts desdits moyens de serrage (3), étant aptes à agir sur la face (9) dudit verre (6) opposée à celle (9') où lesdits moyens de coupe (5) agissent,
- des moyens d'escamotage (12) desdits moyens de serrage (3), aptes à permettre l'évacuation d'une chute annulaire de matière (7) obtenue après découpage de ladite pièce (6) dans ladite ébauche (1).

6. Dispositif selon la revendication 5, dans lequel :
- ledit support (2) est constitué d'une tige, sensiblement verticale,
- lesdits moyens d'escamotage (12) sont constitués d'un coulisseau (14), coulissant librement verticalement sur ladite tige (2), lesdits moyens de serrage (3) étant prévus en appui sur ledit coulisseau (14).

7. Dispositif selon la revendication 6, dans lequel lesdits moyens de serrage (3) sont constitués de brides (15) articulées radialement par rapport à ladite tige (2), et de moyens de rappel élastiques (16) desdites brides (15) vers ladite tige (2).

8. Dispositif selon la revendication 7, dans lequel :
- lesdites brides (15) sont au nombre de trois et sont espacées entre elles d'environ 120 °,
- lesdits moyens de rappel (16) sont constitués d'un ou plusieurs ressorts (20) définissant un triangle sensiblement équilatéral situé dans un plan horizontal, les sommets dudit triangle étant assujettis à chacune desdites brides (15).

9. Dispositif selon la revendication 5, comprenant des moyens d'ouverture (22) desdits moyens de serrage (3).

10. Dispositif selon la revendication 6, dans lequel :
- lesdits moyens de positionnement (11) sont situés à l'extrémité supérieure de ladite tige (2),
- lesdits moyens de maintien (8) sont aptes à appliquer une dépression à l'extrémité supérieure de ladite tige (2), à l'aide de conduits (32) traversant celle-ci et/ou lesdits moyens de positionnement (8).

11. Machine de découpage d'une pièce de matière présentant un contour donné, notamment verres de lunettes, à l'intérieur d'une ébauche de même matière, ladite machine comprenant des moyens de coupe (5) aptes à agir sur l'une des faces (9') de ladite ébauche (1) pour permettre de tailler ledit verre (6) dans celle-ci selon ledit contour.

12. Machine selon la revendication 11, dans laquelle lesdits moyens de coupe (5) fonctionnent par fraisage.

13. Machine selon la revendication 11 ou 12, dans laquelle lesdits moyens de coupe (5) sont également aptes à permettre la réalisation d'un ou plusieurs perçages dudit verre (6) et/ou une finition des chants (10) dudit verre (6), après obtention.

14. Machine selon l'une quelconque des revendications 11 à 13, comprenant des moyens de préhension (3, 8) de ladite ébauche (1) par ses chants (4) et/ou par sa face (9) opposée à celle (9') où lesdits moyens de découpe (5) agissent.
